# NOUVEAU FASCICULE DE BREVET EUROPEEN

(11) **EP 1 029 623 B2**
(45) Date de publication et mention de la décision concernant l'opposition: **22.08.2007**
(45) Mention de la délivrance du brevet: 07.05.2003
(21) Numéro de dépôt: 00400431.3
(22) Date de dépôt: 16.02.2000
(51) Int. Cl.: B23D 55/06

(54) **Scie à ruban ayant au moins deux volants motorisés du ruban de scie pour le sciage des métaux**
Bandsäge mit mindestens zwei individuell angetriebenen Sägebandumlenkrollen zum Sägen von Metallen
Bandsaw with at least two individually driven saw blade pulleys

(30) Priorité: 19.02.1999 FR 9902059
(43) Date de publication de la demande: 23.08.2000
(73) Titulaire: KEURO Besitz GmbH & Co. EDV-Dienstleistungs KG, 77855 Achern (DE)
(72) Inventeur: Missler, Patrick, 91450 Etiolles (FR)
(74) Mandataire: Nuss, Laurent

(56) Documents cités:
- DE-C1- 3 418 697
- FR-A- 1 102 349
- FR-A- 2 657 034
- GB-A- 402 765
- PATENT ABSTRACTS OF JAPAN vol. 6, no. 196 (M-161) [1074], 5 octobre 1982 (1982-10-05) -& JP 57 102721 A (OOISHI ENGINEERING KK), 25 juin 1982 (1982-06-25)

## Description

L'invention est relative à un dispositif pour le sciage des métaux par ruban de scie, du type comportant un ensemble mobile de travail comprenant le ruban de scie et son dispositif d'entraînement, ainsi que des moyens d'amenée de métaux en barres sous ledit ensemble mobile en vue de leur sciage. Un tel dispositif est connu, par exemple, du document FR-A-2 657 034.

La demande FR 98.15863 déposée le 16 décembre 1998 et non publiée à la date de dépôt de la présente demande décrit un dispositif pour le sciage des métaux par ruban de scie, du type comportant un ensemble mobile de travail comprenant le ruban de scie et son dispositif d'entraînement, un moyen pour avancer les métaux en barre sous ledit ensemble mobile en vue de leur sciage, et un moyen d'évacuation des copeaux de sciage. Ce dispositif comporte un bâti rigide comprenant une base sur laquelle est disposé le moyen pour avancer les métaux en barres ainsi qu'au moins un support de l'ensemble mobile de travail, de manière à supporter l'ensemble mobile de travail en avant de ladite base dans le sens d'avance des métaux et au-dessus du moyen d'évacuation des copeaux de sciage.

Ce dispositif donne entièrement satisfaction, est d'une fabrication simple et économique, et présente une bonne robustesse et une excellente productivité.

Dans ce dispositif, ainsi que dans les machines à scier à ruban de type connu, on prévoit un seul volant motorisé qui assure l'entraînement du ruban, tandis qu'un autre volant libre en rotation sert de poulie de renvoi et assure simultanément la tension du ruban.

On sait qu'il est nécessaire de maintenir le ruban de scie sous tension, d'une part pour obtenir une bonne géométrie de coupe et d'autre part pour appliquer le ruban contre le volant motorisé pour assurer l'entraînement du ruban par friction sur la demi-périphérie du volant motorisé.

Pour obtenir une bonne géométrie de coupe, la rigidité du ruban doit être maximale, ce qui est obtenu en mettant le ruban sous une tension voisine de la limite de la résistance mécanique du feuillard constituant la majeure partie du ruban de scie.

Cependant, dans les machines à scier de type connu, la productivité est limitée par la tendance au glissement du ruban de scie au contact du volant motorisé lorsqu'on augmente la puissance du motoréducteur d'entraînement du volant motorisé. Cette limitation est particulièrement sensible lorsque l'on utilise, au lieu d'un ruban de scie en acier rapide, un ruban de scie avec des pointes de dents en carbure de tungstène. On constate alors que, malgré l'augmentation ou le doublement de la puissance d'entraînement du volant motorisé, la productivité est limitée par le glissement sur le volant motorisé, quelle que soit la tension appliquée au ruban de scie et quelle que soit l'augmentation de puissance du motoréducteur d'entraînement.

Il est par ailleurs connu du document JP-A-5-177 430 un dispositif d'entraînement d'un ruban de scie par l'intermédiaire de deux volants motorisés. Ce document prévoit de réaliser l'alimentation des deux moteurs par l'intermédiaire d'un circuit d'alimentation en puissance périodique utilisant la modulation de longueur d'impulsions ou autres.

L'invention a pour but de remédier à ces inconvénients, en proposant un nouveau dispositif dans lequel la surface d'entraînement du ruban de scie est augmentée, tout en maintenant celui-ci sous la tension requise voisine de la limite de la résistance mécanique du feuillard du ruban de scie.

L'invention a pour objet un dispositif pour le sciage des métaux par ruban de scie selon la revendication 1.

Il est préféré que :
- chaque volant motorisé d'entraînement est entraîné par l'intermédiaire d'un réducteur à arbre creux,
- chaque volant est monté équilibré sur deux paliers symétriques, de manière à éviter toute transmission d'effort radial sur leur entraînement respectif,
- un volant motorisé est monté sur l'ensemble mobile avec interposition d'un bras anti-rotation muni d'un dispositif de mesure de couple résistant, en vue de contrôler la vitesse de descente de l'ensemble mobile de travail,
- les moyens de motorisation sont montés de part et d'autre du plan vertical passant par le ruban de scie,
- un volant motorisé est déplaçable avec ses moyens de motorisation par rapport à la structure porteuse de l'ensemble mobile de travail selon une direction correspondant à la mise sous tension du ruban de scie,
- chaque volant motorisé comporte un moyen d'entraînement intermédiaire claveté sur une extrémité dépassante de l'arbre du volant correspondant,
- chaque moyen d'entraînement intermédiaire est par exemple un réducteur à arbre tubulaire apte à être enfilé directement sur l'extrémité d'arbre de volant munie d'une clavette de solidarisation en rotation,
- chaque moyen d'entraînement intermédiaire comporte un élément de solidarisation à un bout dépassant de l'arbre à l'aide d'un moyen démontable.

L'invention sera mieux comprise grâce à la description qui va suivre donnée à titre d'exemple non limitatif en référence aux dessins annexés dans lesquels :
- la figure 1 représente schématiquement une vue en perspective d'un dispositif selon l'invention,
- la figure 2 représente schématiquement une vue partielle en coupe selon un plan vertical II-II de la figure 1 d'un volant motorisé de dispositif selon l'invention.

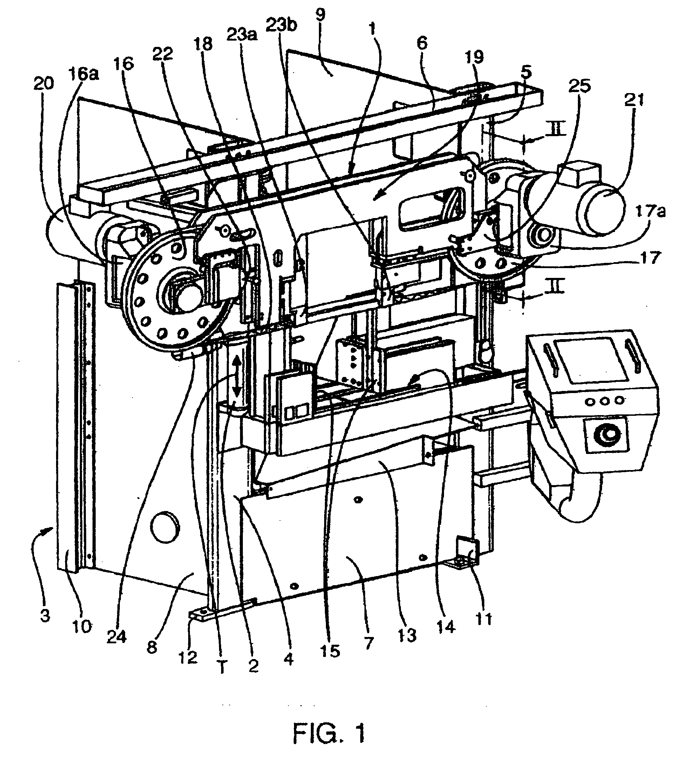

En référence à la figure 1, un dispositif de sciage des métaux selon l'invention comporte un ensemble mobile de travail 1 supporté par au moins un support 2 solidaire d'une base 3. Le support 2 et la base 3 sont liés rigidement entre eux pour constituer un bâti de dispositif.

Le dispositif de la figure 1 est du genre décrit dans la demande de brevet français 98.15863 déposée le 16 décembre 1998 et non publiée à la date de dépôt de la présente demande. Selon l'enseignement de ce document FR 98.15863, la base 3 est constituée par assemblage de tôles formant en partie inférieure un coffrage apte à recevoir du béton pour former un bloc d'embase assurant la rigidité du bâti. Le bâti est constitué à partir de deux montants verticaux 4 et 5 reliés entre eux par une traverse supérieure 6 et permettant l'assemblage de tôles 7, 8, 9 entre elles et leur solidarisation en vue de constituer le coffrage apte à recevoir du béton. Au moins une tôle 8 peut être rigidifiée par un montant vertical 10, tandis que le réglage et le dégauchissage préalable à l'assemblage des tôles avant coulage du béton peut être effectué par positionnement d'au moins une cornière 11 par rapport à un pied de fixation 12 au sol. Après coulage du béton, le pied 12 et la cornière 11 sont prisonniers du bloc de béton après la prise de celui-ci. Une tôle supérieure 13 et un ensemble d'amenée et de maintien 14 des métaux en barres sont prévus entre les deux montants verticaux 4 et 5. De manière connue, les barres de métaux sont amenées par un convoyeur arrière monté sur une traverse solidaire de l'embase en béton et portant un étau d'amenée des barres déplaçable par pas successifs. L'étau d'amenée des métaux en barres avance les barres dans un espace ou passage correspondant au sciage. Dans cet espace, les barres non représentées sont maintenues par des étaux de maintien 15 pour les immobiliser au cours du sciage.

L'ensemble mobile 1 comporte deux volants 16 et 17 sur lesquels est monté un ruban de scie 18. Les volants 16 et 17 sont montés sur une structure porteuse 19 portant à une extrémité le volant 16 et à l'autre extrémité le volant 17. Le volant 16 est un volant motorisé, monté de manière déplaçable avec son moteur d'entraînement 20, afin de mettre le ruban de scie 18 sous une tension prédéterminée. Le volant 17 est également un volant motorisé par un moteur électrique 21.

Avantageusement, un réducteur à arbre creux 16a ou 17a est interposé entre chaque volant 16 ou 17 et son moteur 20 ou 21 électrique d'entraînement correspondant.

Sur la figure 1, les réducteurs 16a, 17a et les moteurs 20, 21 sont disposés de part et d'autre du plan vertical passant par le ruban de scie 18. L'invention n'est pas limitée à cette disposition, et s'étend également à toute autre disposition, du même côté du plan vertical passant par le ruban de scie, ou selon un décalage angulaire par rapport au plan vertical passant par l'axe du moteur et par l'axe de rotation du volant correspondant.

Selon d'autres dispositions constructives similaires à celles décrites dans la demande de brevet français 98.15863 déposée le 16 décembre 1998 et non publiée à la date de dépôt de la présente demande, un moyen 22 de mise en tension est prévu pour déplacer l'ensemble du volant motorisé 16, de son réducteur 16a et de son moteur électrique 20 d'entraînement ; l'ensemble mobile 1 est déplaçable sur le support 2 formant une colonne de guidage afin de permettre le déplacement de l'ensemble mobile 1 dans le sens de la flèche T ; la structure porteuse 19 comporte deux plaques parallèles portant à chaque extrémité une paire de paliers situés de pat et d'autre de chaque volant 16 ou 17 ; des pinces de redressage et de guidage 23a, 23b sont prévues pour redresser le ruban de scie 18 selon le plan de coupe vertical ; et un dispositif 24 de nettoyage en continu du ruban de scie peut être prévu.

Les moteurs électriques 20 et 21 d'entraînement sont alimentés par la même alimentation électrique à convertisseur de fréquence. Le fait d'alimenter les moteurs électriques par convertisseur de fréquence présente l'avantage de pouvoir compenser une éventuelle différence de diamètre entre le volant 16 et le volant 17, car on constate que le moteur le plus chargé subit un glissement dans son mouvement de rotation par rapport à la fréquence imposée par le convertisseur de fréquence commun. On obtient ainsi automatiquement une répartition optimale de charge entre les deux moteurs, la différence de puissance constatée entre les deux moteurs étant inférieure à 5 %.

Cette disposition évite tout risque de glissement du ruban de scie et permet d'augmenter la productivité sensiblement proportionnellement à l'augmentation de puissance électrique totale consommée.

Le bras anti-rotation 25 empêchant le motoréducteur 17a, 21 de tourner autour du volant 17 est avantageusement utilisé pour mesurer continûment le couple de rotation appliqué au volant 17 au cours de l'opération de sciage, de manière à optimiser la régulation du sciage de manière connue en soi.

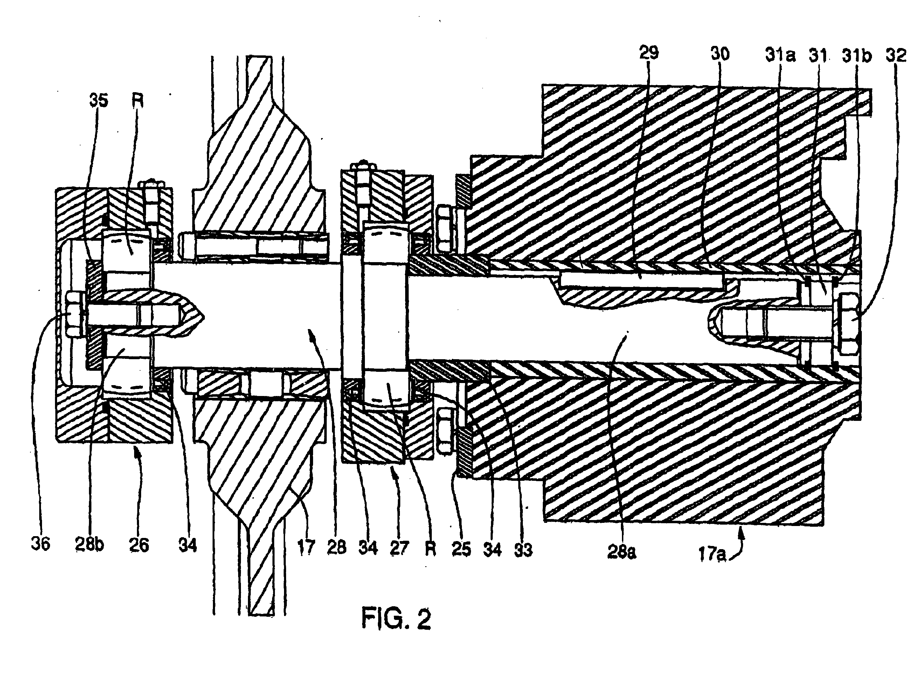

En référence à la figure 2, le volant 17 est représenté monté entre deux paliers 26 et 27 à roulement solidaires de l'ensemble mobile 1, en particulier par l'intermédiaire du bras anti-rotation 25. Le volant 17 est avantageusement monté sur un arbre 28 par un dispositif de serrage biconique. L'arbre 28 est monté à rotation sur des roulements R montés respectivement dans les paliers 26 et 27. L'arbre 28 est ainsi monté de manière équilibrée sur les deux paliers 26 et 27, de sorte qu'aucun effort engendré par la tension du ruban de scie n'est transmis sur sa partie extérieure 28a. Le bout d'arbre 28a est claveté au moyen d'une clavette 29 avec un arbre tubulaire d'entraînement 30 du réducteur à arbre creux 17a.

A l'intérieur de l'arbre tubulaire 30, deux gorges sont ménagées pour recevoir des anneaux élastiques 3 la, 31b afin d'assurer la fixation d'une rondelle 31 solidaire de l'arbre tubulaire 30. Une vis 32 de montage assure la solidarisation de l'ensemble tournant ainsi constitué et transmet une poussée sur une entretoise 33 de blocage appuyant sur la partie intérieure du roulement R correspondant. Des joints à lèvres appropriés 34 sont disposés sur les paliers 26 et 27, et une rondelle d'extrémité 35 fixée par une vis 36 est prévue pour bloquer l'extrémité opposée 28b de l'arbre 28 contre la face interne du roulement R correspondant.

L'ensemble tournant constitué par les éléments 28, 29, 30, 31, 31a, 31b, 32, 33, 35 et 36 est monté de manière équilibrée sur les paliers 26 et 27, de sorte qu'aucune poussée latérale engendrée par la tension du ruban de scie ne vient se reporter sur le réducteur à arbre creux 17 a ou sur le moteur 21 d'entraînement. Cette disposition permet par conséquent d'envisager l'utilisation d'un motoréducteur à arbre creux du commerce ne nécessitant pas de pouvoir résister à une poussée radiale ou déviée le long de l'axe de rotation de l'arbre 28.

En complément du doublage de la surface d'entraînement du ruban de scie, d'autres avantages particuliers et surprenants sont obtenus grâce à l'invention : ainsi, une augmentation importante de la qualité de surface du bord de la pièce coupé par le ruban de scie et une augmentation importante de la durée d'utilisation du ruban de scie ont été constatées.

L'invention décrite en référence à un mode de réalisation particulier n'y est nullement limitée, mais couvre au contraire toute modification de forme et toute variante de réalisation dans le cadre des revendications suivantes.

## Revendications

1. Dispositif pour le sciage des métaux par ruban (18) de scie, comportant une base (3) et un support (2) d'un ensemble mobile (1) de travail ;
le dispositif pour le sciage des métaux par ruban de scie étant du type comportant cet ensemble mobile (1) de travail comprenant le ruban (18) de scie et son dispositif d'entraînement, ainsi que des moyens d'amenée de métaux en barres sous ledit ensemble mobile en vue de leur sciage ;
l'ensemble mobile (1) de travail étant déplaçable sur le support (2) formant colonne de guidage du déplacement (T) de l'ensemble mobile (1) ;
une structure porteuse (19) faisant partie de l'ensemble mobile (1) étant prévue et portant à une extrémité un volant (16) motorisé, monté de manière déplaçable avec son moteur (20) d'entraînement afin de mettre le ruban (18) de scie sous une tension prédéterminée;
un moyen (22) de mise sous tension étant prévu pour déplacer l'ensemble du volant (16) motorisé et de son moteur (20) d'entraînement;
la structure porteuse (19) portant à l'autre extrémité un volant (17) de renvoi du ruban (18) de scie;
des pinces (23a, 23b) de redressage et de guidage étant prévues pour redresser le ruban (18) de scie selon un plan de coupe vertical,
dans lequel l'ensemble mobile de travail comporte au moins deux volants (16, 17) motorisés (20, 21) d'entraînement du ruban (18) de scie situés de part et d'autre du passage des barres à scier, de manière à augmenter la surface d'entraînement du ruban (18) de scie tout en maintenant le ruban (18) de scie sous tension ;
dans lequel le volant (17) de renvoi du ruban (18) de scie est un volant motorisé par un moteur électrique (21),
dans lequel le moteur (20) d'entraînement du volant (16) est un moteur (20) électrique d'entraînement,
et dans lequel les deux volants (16, 17) motorisés (20, 21) d'entraînement sont alimentés électriquement par la même alimentation à convertisseur de fréquence,
de manière à commander la vitesse de chaque moteur (20, 21) électrique par une fréquence commune et à compenser une éventuelle différence de diamètre entre les volants (16, 17) par un glissement du moteur le plus chargé dans son mouvement de rotation par rapport à la fréquence imposée par le convertisseur de fréquence commune pour obtenir automatiquement une répartition optimale de charge entre les deux moteurs (20, 21).

2. Dispositif selon la revendication 1, **caractérisé en ce que** chaque volant (16 ou 17) motorisé (20 ou 21) d'entraînement est entraîné par l'intermédiaire d'un réducteur (16a ou 17a) à arbre creux (30).

3. Dispositif selon l'une quelconque des revendications précédentes, **caractérisé en ce que** chaque volant (16, 17) est monté équilibré sur deux paliers (26, 27) symétriques, de manière à éviter toute transmission d'effort radial sur leur entraînement (16a, 20 ; 17a, 21) respectif.

4. Dispositif selon l'une quelconque des revendications précédentes, **caractérisé en ce qu'**au moins un volant (17) motorisé (21) est monté sur l'ensemble mobile (1) avec interposition d'un bras (25) anti-rotation muni d'un dispositif de mesure de couple résistant, en vue de contrôler la vitesse de descente de l'ensemble mobile (1) de travail.

5. Dispositif selon l'une quelconque des revendications précédentes, **caractérisé en ce que** les moyens (16a, 20 ; 17a, 21) de motorisation sont montés de part et d'autre du plan vertical passant par le ruban de scie (18).

6. Dispositif selon l'une quelconque des revendications précédentes, **caracterisé en ce qu'**un volant (16) motorisé (20) est déplaçable avec ses moyens (16a, 20) de motorisation par rapport à la structure porteuse (19) de l'ensemble mobile (1) de travail selon une direction correspondant à la mise sous tension du ruban (18) de scie.

7. Dispositif selon l'une quelconque des revendications précédentes, **caractérisé en ce que** chaque volant (16 ou 17) motorisé (20 ou 21) comporte un moyen d'entraînement (16a ou 17a) intermédiaire claveté (29) sur une extrémité (28a) dépassante de l'arbre (28) du volant (17) correspondant.

8. Dispositif selon la revendication 7, **caractérisé en ce que** chaque moyen (16a, 17a) d'entraînement intermédiaire est un réducteur à arbre tubulaire (30) apte à être enfilé directement sur l'extrémité (28a) d'arbre (28) de volant (17) munie d'une clavette (29) de solidarisation en rotation.

9. Dispositif selon la revendication 7 ou la revendication 8, **caractérisé en ce que** chaque moyen d'entraînement (16a, 17a) intermédiaire comporte un élément (31) de solidarisation à un bout dépassant de l'arbre (28) de volant (17) à l'aide d'un moyen (32) démontable.

## Claims

1. Device for sawing metal with a band saw (18), comprising a base (3) and one support (2) supporting a movable working assembly (1);
the device for sawing metal with a band saw being of the type comprising this movable working assembly (1) comprising the band saw (18) and its drive device, as well as means to bring metal bars below said movable assembly for their sawing;
the movable assembly (1) being movable on the support (2) forming a guide column of the movement (T) of the movable assembly (1);
a portable structure (19) being part of the movable working assembly (1) being provided and carrying at one end a power-driven wheel (16), mounted displaceably with its drive motor (20) so as to place the saw band (18) under a predetermined tension;
a tensioning means (22) being provided to move the assembly of the driven wheel (16) and its drive motor (20);
the portable structure (19) carrying at the other end a band saw (18) returning wheel (17);
straightening and guiding clamps (23a, 23b) are provided to straighten the band saw (18) in the vertical cutting plane,
in which the movable working assembly (1) comprises at least two power-driven (20, 21) wheels (16, 17) for driving the band saw (18), said wheels being positioned on opposite sides of the passage for the bars to be sawed, so as to increase the drive surface of the saw band whilst maintaining it under tension;
in which the band saw (18) returning wheel (17) is a wheel driven by an electric motor (21);
in which the drive motor (20) of the wheel (16) is an electric drive motor (20),
and in which the two motorized (20, 21) wheels (16, 17) are electrically supplied by the same supply with a frequency converter, so as to control the speed of each motor by a common frequency and to compensate any possible difference in diameter between the wheel (16) and the wheel (17) through a slippage of the more heavily loaded motor in its rotational movement relative to the frequency imposed by the common frequency converter to obtain automatically an optimum distribution of the load between the two motors (20, 21).

2. Device according to claim 1, **characterized in that** each motorized (20 or 21) drive wheel (16 or 17) is driven by means of a reducer (16a or 17a) having a hollow shaft (30).

3. Device according to anyone of the preceding claims, **characterized in that** each wheel (16, 17) is mounted, balanced, on two symmetrical bearings (16, 27), so as to prevent any transmission of radial force to their respective drive (16a, 20; 17a, 21).

4. Device according to anyone of the preceding claims, **characterized in that** at least one motorized (21) wheel (17) is mounted on the movable assembly (1), there being interposed an anti-rotation arm (25) provided with a load-moment measuring device, for the purpose of controlling the lowering speed of the movable working assembly (1).

5. Device according to anyone of the preceding claims, **characterized in that** the motorization means (16a, 20; 17a, 21) are mounted on either side of the vertical plane passing through the saw band (18).

6. Device according to anyone of the preceding claims, **characterized in that** one motorized (20) wheel (16) is displaceable by its motorization means (16a, 20) in relation to the carrying structure (19) of the movable work assembly (1) in a direction corresponding to the tensioning of the saw band (18).

7. Device according to anyone of the preceding claims, **characterized in that** each motorized (20 or 21) wheel (16 or 17) comprises an intermediate drive means (16a or 17a) keyed (29) on a projecting end (28a) of the shaft (28) of the corresponding wheel (17).

8. Device according to claim 7, **characterized in that** each intermediate drive means (16a, 17a) is a reducer having a tubular shaft (30), the said reducer being capable of being slipped directly onto the wheel (17) shaft (28) end (28a) provided with a key (29) for fixing in terms of rotation.

9. Device according to claim 7 or claim 8, **characterized in that** each intermediate drive means (16a, 17a) comprises an element (31) for fixing to a projecting end of the wheel (17) shaft (28) with the aid of a demountable means (32).

## Patentansprüche

1. Vorrichtung zum Sägen von Metallen mittels eines Sägebands (18), aufweisend eine Basis (3) und eine Halteeinrichtung (2) einer beweglichen Arbeitsanordnung (1);
wobei die Vorrichtung zum Sägen von Metallen mittels eines Sägebands einem Typ angehört, der die bewegliche Arbeitsanordnung (1) einschließlich des Sägebands (18) und dessen Antriebsvorrichtung sowie Mittel zum Zuführen von Metallstangen unter die bewegliche Anordnung aufweist, um diese zu sägen;
wobei die bewegliche Arbeitsanordnung auf der Halteeinrichtung (2), die eine Führungssäule für die Verschiebung (T) der beweglichen Anordnung (1) bildet, verschiebbar ist;
wobei eine Tragstruktur (19) vorgesehen ist, die Teil der beweglichen Anordnung (1) ist und die an einem Ende eine angetriebene Umlenkrolle trägt, die zusammen mit ihrem Antriebsmotor (20) verschiebbar angebracht ist,
um das Sägeband (18) mit einer vorbestimmten Spannung zu beaufschlagen;
wobei ein Spannungsbeaufschlagungsmittel (22) vorgesehen ist, um die Anordnung aus der angetriebenen Umlenkrolle (16) und ihrem Antriebsmotor (20) zu verschieben;
wobei die Tragstruktur (19) am anderen Ende eine Rückführumlenkrolle (17) für das Sägeband (18) trägt;
wobei Ausricht- und Führungsklemmen (23a, 23b) vorgesehen sind, um das Sägeband (18) gemäß einer vertikalen Schnittebene auszurichten,
bei der die bewegliche Arbeitsanordnung wenigstens zwei angetriebene (20, 21) Antriebsumlenkrollen (16, 17) für das Sägeband (18) aufweist, die derart beiderseits des Durchgangs für die zu sägenden Stangen angeordnet sind, dass die Antriebsfläche des Sägebands (18) vergrößert ist, während das Sägeband (18) unter Spannung gehalten wird;
bei der die Rückführumlenkrolle (17) des Sägebands (18) eine Umlenkrolle ist, die durch einen Elektromotor (21) angetrieben ist,
bei der der Antriebsmotor (20) der Umlenkrolle (16) ein elektrischer Antriebsmotor (20) ist,
und bei der die beiden angetriebenen (20, 21) Antriebsumlenkrollen (16, 17) durch eine gemeinsame Versorgung unter Verwendung eines Frequenzwandlers elektrisch versorgt sind,
so dass die Geschwindigkeit jedes Elektromotors (20, 21) durch eine gemeinsame Frequenz gesteuert und eine eventuelle Differenz zwischen den Durchmessern der Umlenkrollen (16, 17) durch Schlupf des stärker belasteten Motors bei seiner Drehbewegung bezüglich der durch den gemeinsamen Frequenzwandler vorgegebenen Frequenz kompensiert ist, um automatisch eine optimale Lastverteilung zwischen den beiden Motoren (20, 21) zu erhalten.

2. Vorrichtung nach Anspruch 1, **dadurch gekennzeichnet, dass** jede angetriebene (20 oder 21) Umlenkrolle (16 oder 17) über ein Untersetzungsgetriebe (16a oder 17a) mit Hohlwelle (30) angetrieben ist.

3. Vorrichtung nach einem der vorhergehenden Ansprüche, **dadurch gekennzeichnet, dass** jede Umlenkrolle (16, 17) in zwei symmetrischen Lagern (26, 27) ausbalanciert angeordnet ist, so dass jegliche Übertragung einer Radialbeanspruchung auf ihren jeweiligen Antriebsstrang (16a, 20; 17a, 21) vermieden wird.

4. Vorrichtung nach einem der vorhergehenden Ansprüche,
**dadurch gekennzeichnet,**
**dass** wenigstens eine angetriebene (21) Umlenkrolle (17) unter Zwischenschaltung eines rotationsverhindernden Armes (25) auf der beweglichen Anordnung (1) angeordnet ist, der eine Vorrichtung zum Messen eines Widerstandsmoments aufweist, um die Abwärtsgeschwindigkeit der beweglichen Arbeitsanordnung (1) zu überwachen.

5. Vorrichtung nach einem der vorhergehenden Ansprüche, **dadurch gekennzeichnet, dass** die Antriebsmittel (16a, 20; 17a, 21) beiderseits der vertikalen Ebene angeordnet sind, die durch das Sägeband (18) verläuft.

6. Vorrichtung nach einem der vorhergehenden Ansprüche, **dadurch gekennzeichnet, dass** eine angetriebene (20) Umlenkrolle (16) mit ihren Antriebsmitteln (16a, 20) bezüglich der Tragstruktur (19) der beweglichen Arbeitsanordnung (1) in einer Richtung verschiebbar ist, die der Spannungsbeaufschlagung des Sägebandes (18) entspricht.

7. Vorrichtung nach einem der vorhergehenden Ansprüche, **dadurch gekennzeichnet, dass** jede Umlenkrolle (16 oder 17) ein Zwischenantriebsmittel (16a oder 17a) aufweist, das an einem hervorstehenden Ende (28a) der Welle (28) der betreffenden Umlenkrolle (17) festgekeilt (29) ist.

8. Vorrichtung nach Anspruch 7, **dadurch gekennzeichnet, dass** jedes Zwischenantriebsmittel (16a, 17a) ein Untersetzungsgetriebe mit Hohlwelle (30) ist, das dazu ausgebildet ist, direkt auf das Ende (28a) der Welle (28) der Umlenkrolle (17) aufgesetzt zu werden, das mit einem Keil (29) zum drehfesten Verbinden ausgestattet ist.

9. Vorrichtung nach Anspruch 7 oder Anspruch 8, **dadurch gekennzeichnet, dass** jedes Zwischenantriebsmittel (16a, 17a) ein Element (31) zum Verbinden mit einem hervorstehenden Ende der Welle (28) der Umlenkrolle (17) unter Verwendung eines demontierbaren Mittels (32) aufweist.
